# EUROPEAN PATENT SPECIFICATION

(11) **EP 2 349 630 B1**
(45) Date of publication and mention of the grant of the patent: **17.09.2014**
(21) Application number: 09745106.6
(22) Date of filing: 20.10.2009
(51) Int. Cl.: B23K 9/29, B23K 9/32, F16B 7/04

(54) **ROTATING WELDING GUN HANDLE TO ACHIEVE TRIGGER-UP OR TRIGGER-DOWN ORIENTATION**
ROTIERENDER SCHWEISSPISTOLENGRIFF ZUM ERHALT EINER AUSRICHTUNG MIT OBEN- ODER UNTENLIEGENDEM ABZUG
MANCHE DE PISTOLET À SOUDER ROTATIF POUR OBTENIR UNE ORIENTATION DE DÉCLENCHEMENT VERS LE HAUT OU DE DÉCLENCHEMENT VERS LE BAS

(30) Priority: 20.10.2008 US 254257
(43) Date of publication of application: 03.08.2011
(73) Proprietor: Lincoln Global, Inc., City of Industry, CA 91748 (US)
(72) Inventor: KARPOFF, Mark, C., City of Industry, California 91748 (US); DILLER, Eric, D., City of Industry, California 91748 (US)
(74) Representative: GROSSE SCHUMACHER KNAUER VON HIRSCHHAUSEN
(86) International application number: PCT/IB2009/007168
(87) International publication number: WO 2010/046753

(56) References cited:
- US-A- 5 003 146
- US-A- 5 384 447
- US-A- 5 728 995
- US-A1- 2006 226 136

## Description

The present invention is directed to the field of welding, more specifically to a welding or brazing gun according to the preamble of claim 1 (see, for example, US 2006/226136).

### Background of the Invention

Various types of welding guns have been used for many years in the welding industry. For example, welding guns are employed in metal inert gas (MIG) and flux cored arc welding (FCAW) operations. Very often the welding applications in which welding guns are employed involve welding "out-of-position." Welding "out-of-position" with welding guns can be difficult to accomplish because of their structure.

Welding guns typically comprise a gun tube portion, which is curved, and a trigger assembly portion which is coupled to the gun tube portion. The gun tube portion is curved to direct the electrode and shielding gas (if used) towards the weld in an easy to use and ergonomic way, and if the gun is a fume gun it positions the fume collection openings near the weld and weld plume. Secured to the trigger assembly portion is a trigger assembly. The operation of the trigger assembly typically activates the welding operation, by causing the welding electrode to advance, receive a welding waveform and cause the shielding gas (if employed) to be emitted. Thus, to maintain the welding operation the trigger must continuously be depressed. This becomes difficult when "out-of-position" welding is required. During such welding operations, it is often required that the welder hold the gun in an awkward position because of the location of the trigger. This is undesirable because it can affect the quality of the weld and lead to fatigue of the welder.

In an effort to address this, some welding guns have been developed which allow for the trigger assembly portion to be disassembled and reassembled in a position 180 degrees from the original position. However, this is operation is time consuming, requires the use of additional tools, can often lead to damage to the gun or the trigger assembly portion, and only allows for two positions to be achieved.

A further alternative has been to allow for the movement of the gun tube portion. However, this solution is also problematic because the trigger position remains in the same location (which can be very inconvenient), and the welding current, gas and wire feeding paths are interrupted during the repositioning process.

Accordingly, there is a need for a welding gun assembly which addresses the problems identified above.

### SUMMARY OF THE INVENTION

A welding or brazing gun assembly according to the present invention is provided, according to claim 1. Specifically, the invention comprises a welding or brazing gun assembly that has a fume tube assembly, a handle portion having a trigger assembly, and a locking mechanism which couples the fume tube assembly with the handle portion. When the locking mechanism is in a first position the handle portion is rotatably secured with respect to the fume tube assembly and when the locking mechanism is in a second position the handle portion is rotatable with respect to the fume tube assembly. Further, the locking mechanism remains adjacent to either of the fume tube assembly or the handle portion in both the first position and the second position.

### BRIEF DESCRIPTION OF THE DRAWINGS

The advantages, nature and various additional features of the invention will appear more fully upon consideration of the illustrative embodiments of the invention, which are schematically set forth in the figures, in which:
FIGURE 1 is a diagrammatical representation of a welding gun assembly in accordance with an exemplary embodiment of the present invention;
FIGURE 2 is a diagrammatical representation of a cross-sectional view of an exemplary embodiment of the present invention; and
FIGURE 3 is a diagrammatical representation of another cross-sectional view of an exemplary embodiment of the present invention.

### DETAILED DESCRIPTION OF EXEMPLARY EMBODIMENTS

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

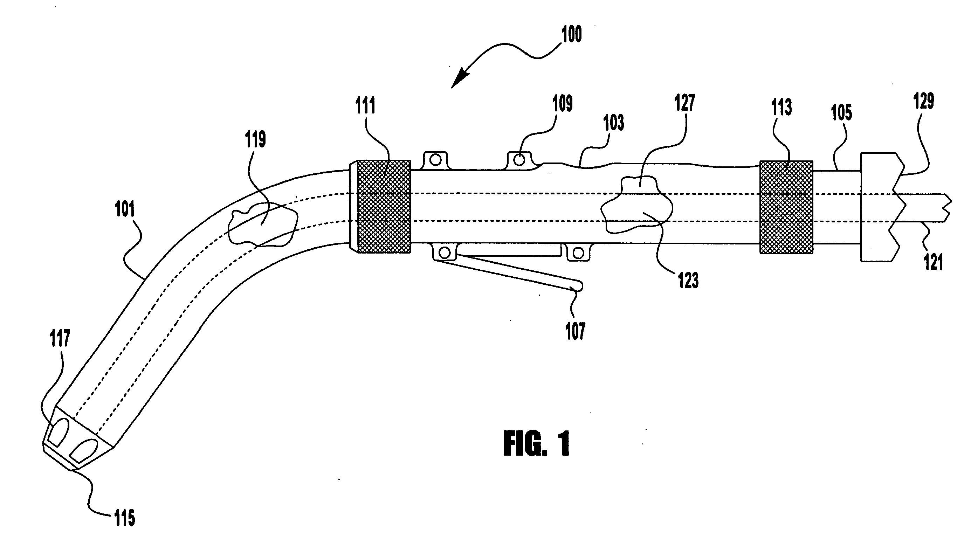

FIG. 1 depicts an exemplary embodiment of a welding gun assembly 100 in accordance with an exemplary embodiment of the present invention. The welding gun assembly 100 contains a fume tube assembly 101 which is typically curved. In an exemplary embodiment is a nozzle assembly 115 which is attached to a gas diffuser (not shown) which is attached to the gun tube assembly 119 through which the welding wire and shielding gas passes for the welding operation. The exemplary embodiment of the gun assembly 100 shown in FIG. 1 is of the "fume" gun type. As such, the nozzle assembly 115 is positioned internal to a fume tube assembly 101. The fume tube assembly 101 is used to direct a vacuum or suction to the area surrounding the welding operation to collect fumes from the weld plume. The operation and overall structure of a fume gun structure is known to those of ordinary skill in the art, and will not be discussed in detail herein.

In an exemplary embodiment, the fume tube assembly contains fume openings 117 to assist in drawing welding fumes through the fume tube assembly 101.

As shown, the fume tube assembly 101 is coupled to a handle portion 103. The handle portion 103 contains a trigger assembly 107 and a number of coupling fasteners 109 to secure the components of the handle portion 103 to each other (in an embodiment, the handle portion 103 is made up of two halves). The handle portion 103 couples the fume tube assembly 101 with the hose assembly 105. The hose assembly 105 is coupled to a welding power supply and/or wire feeder apparatus and/or shielding gas supply and/or fume vacuum apparatus (not shown).

Because the structure of the hose assembly 105, power supply, wire feeder, gas supply and fume vacuum are known to those of ordinary skill in the art, a detailed discussion of these will not be included herein.

The handle portion 103 can be structured in a number of different ways. In an exemplary embodiment of the present invention, the handle portion 103 is made up of two halves which are secured to each other via the fasteners 109. In this embodiment, the handle portion 103 has a left hand portion (seen in FIG. 1) and a right hand portion (opposite the left hand portion). However, the present invention is not limited in this regard and the handle portion 103 can be constructed by any known methods.

As is known the hose assembly 105 directs/guides a welding electrode (not shown) to the welding gun, and/or directs a shielding gas to the nozzle 115, and/or directs fumes away from the welding operation and/or carries control signals from the trigger assembly 107 to a power supply, etc. (not shown) and/or carries a welding waveform signal from a power source to a contact tip (not shown) within the nozzle 115. In an embodiment of the present invention, each of these is passed from the hose assembly 105 into the handle assembly 103 through known connection methods. In an embodiment of the invention, the welding electrode and/or the shielding gas are passed through the handle assembly 103 to the fume tube assembly 101. Further, the fumes extracted from the weld area are passed from the fume tube assembly 101 through to the handle portion 103 and into the hose assembly 105 to be removed from the weld area.

Because the operation of fume type welding guns (and non-fume type welding guns) are well known only a general discussion of their operation will be included herein. Within the hose assembly 105 is a cable assembly 121 which delivers the electrode and shielding gas (if used) to the nozzle 115. Additionally, the cable assembly 121 may contain electrical conduits to send electrical control signals back and forth from the trigger assembly 107 and electrical conduits to send the welding waveform from the power supply (not shown). The cable assembly 121 is coupled and secured to a conduit structure 123 within the handle portion 103. The welding electrode and/or shielding gas and/or control signals and/or welding waveforms pass through the conduit structure 123 via known methods.

The conduit structure 123 is coupled and secured to a gun tube assembly 119 within the fume tube assembly 101. Because the control signals would typically end at the trigger assembly, in an embodiment of the invention, the electrode and/or shielding gas and/or welding waveform are passed from the conduit structure 123 to the gun tube assembly 119 and to the nozzle 115. The connections and structure of the cable assembly 121, conduit structure 123 and gun tube assembly 119 are known.

In a further exemplary embodiment, the cable assembly 121 is coupled directly to the gun tube assembly 119.

In a fume gun embodiment, the fumes are extracted via the openings 117 and a gap or gaps between the nozzle 115 and the end of the fume tube assembly 101. The fumes pass through the gun tube portion 103 (between the tube assembly 101 and the gun tube assembly 119) through the handle portion 103 via the space 127 between the conduit portion 123 and the handle portion 103 and then via a gap 129 between the cable assembly 121 and the hose assembly 105.

The connections between the hose assembly 105, handle portion 103 and fume tube assembly 101 are such that the transmission of the fumes, shielding gas, electrode, and control and waveform signals are unimpeded so that the welding operation is effective.

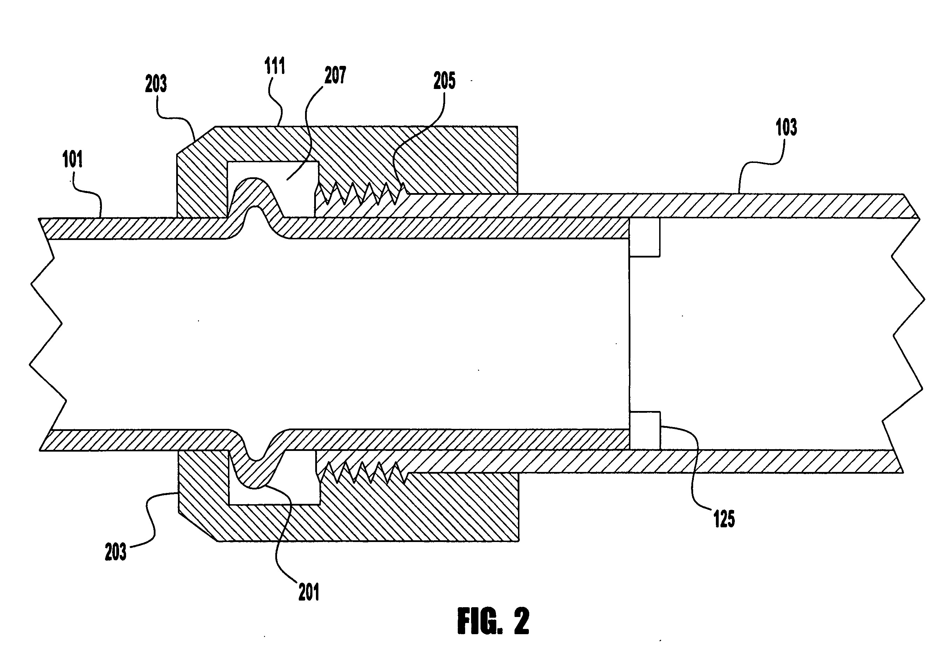

In an embodiment of the present invention, a locking collar 111 couples the fume tube assembly 101 to the handle portion 103. A cross-section of an exemplary embodiment of this connection is shown in FIG. 2. For clarification in FIG. 2, the gun tube assembly 119 and conduit structure 123 are not shown. Returning to FIG. 1, a coupler 113 couples the handle portion 103 to the hose assembly 105. In an embodiment of the present invention, the coupler 113 is a swivel type coupler which allows for the rotation of the handle portion 103 relative to the hose assembly 105. Such coupling mechanisms are known and a detailed discussion will not be included herein. However, in an exemplary embodiment of the invention, the coupler 113 is of a type to allow for the secure lateral connection between the hose assembly 105 and the handle portion 103 (so that they do not separate from each other), but they are free to rotate with respect to each other along a centerline.

Turning now to the cross-section shown in FIG. 2, in the shown embodiment, the fume tube assembly 101 is positioned inside a diameter of the handle portion 103. On an outer surface of the fume tube assembly 101 is a protrusion 201. The protrusion 201 engages with a locking portion 203 of the locking collar 111. The locking collar 111 is coupled to the handle portion via threads 205, or similar mechanism. Further, in the shown embodiment the locking collar 111 has a protrusion cavity 207 within which the protrusion 201 is located when the gun 100 is assembled.

Additionally as shown, on an inner surface of the handle portion 103 is a retainer portion 125. When the handle portion 103 is in the locked position, the end of the fume tube assembly 101 abuts the retainer portion 125 to provide a locking force. Thus, effectively, the fume tube assembly 101 "bottoms out" on the retainer portion 125 and the fume tube assembly 101 is held between the protrusions 201 and the retainer portion 125 to provide the holding force that secures the handle portion 103 in a locked position.

In this embodiment, as the locking collar 111 is tightened via the threads 205, it travels in the direction of the handle portion 103. As the collar 111 travels the locking portion 203 engages with the protrusion 201 and moves the entire fume tube assembly 101 against the handle portion 103, via the retainer portion 125. Therefore, when the collar 111 is in a fully tightened position, the fume tube assembly 101 and the handle portion 103 are rigidly secured to each other. In the shown embodiment, a frictional relationship exists between the fume tube assembly 101 and handle portion 103. This frictional force is sufficient to hold these components motionless with respect to each other.

It is noted that the cross-section of the components shown in FIG. 2 are not intended to be limited. It is contemplated that those of ordinary skill in the art can deviate from the cross-sections and structures shown without deviating from the present invention.

The protrusion 201 is shown in FIG. 2 as having a round shape and the retainer portion 125 are shown having a rectangular shape. However, the present invention is not limited by this exemplary embodiment, and any shapes can be used to achieve the desired locking force. Further, in an exemplary embodiment either one of, or both, of the protrusion 201 and retainer portion 125 extend around the entire perimeter of the fume tube assembly 101 or handle portion 103, respectively. In another embodiment, a series of discrete/separate protrusions 201 and/or retainer portions 125 are positioned around the perimeter of the fume tube assembly 101 or handle portion 103, respectively. The present invention is not limited in this regard. Further, either or both of the protrusion 201 and the retainer 125 can be formed integrally with the fume tube assembly 101 or handle portion, respectively. Alternatively, these components can be secured via other means, such as welding, etc.

In an embodiment of the invention, the outer surface of the collar 111 has a knurled or diamond hatch (or similar abrasive type) surface to allow for easy gripping. Further, in an embodiment of the invention the collar 111 is configured such that its rotation in a clockwise direction locks the handle portion 103 in a secure position. Of course, in an alternative embodiment, the collar 111 can lock the handle portion 103 via a counter-clockwise rotation.

In another exemplary embodiment, not shown, the collars 111 are not of a rotating type, but can slide axially with respect to the gun assembly 100, such that as the collar 111 is moved in the direction toward the handle portion 103, the collar 111 has a shape which secures the fume tube assembly 101 with the handle portion 103 to lock the handle portion 103 into position. For example, as the collar 111 is moved it imparts a compressive force between the components so that the handle portion 103 is locked into position. To unlock the handle portion 103, the collar 111 is moved in a direction away from the handle portion 103 to relieve the locking forces. As those of skill in the art are capable of constructing such a locking mechanism, coupled with this disclosure, a detailed discussion of this embodiment is not included herein.

In the embodiment shown in FIG. 2, as the collar 111 is loosened the locking portion 203 moves away from the protrusion 201. This releases any frictional force or pressure between the components and then allows the handle portion 103 to rotate freely with respect to the assembly 101. This then allows a user to rotate the handle portion 103 with respect to the hose assembly 105 and the fume tube assembly 101 without requiring disassembly of the handle portion 103 or disconnection of the cable assembly 121, conduit structure 123 and/or gun tube assembly 119 from each other.

Therefore, the gun tube assembly 119 can remain in a fixed position with respect to conduit structure 123 and/or hose assembly 121 while the handle portion 103 and attached trigger assembly 107 are rotated to allow the user to have a more ergonomic position.

Once a new acceptable position is achieved the collar 111 can be retightened, thus securing the fume tube assembly 101 and the handle portion 103 again.

In an embodiment of the invention, the surfaces of one or both of the fume tube assembly 101, handle portion 103, and/or the retainer 125 are hatched, grooved or otherwise made rough so that the frictional contact between these components are made stronger. For example, it is contemplated that small "teeth" and grooves are placed on their respective surfaces so that they effectively lock with each other in a locked position. In a further embodiment of the present invention, one or both of the handle portion 103 and assembly 101 have additional protrusions, such as gear teeth, ridges, dimples or the like to secure the portion 103 and assembly 101 relative to each other.

In an embodiment of the invention, the handle portion 103 can be rotated 180 degrees from its normal position (shown in FIG. 1). Because of the nature of the coupling with the locking collar 111 and the protrusion 201, in an exemplary embodiment, the handle portion 103 can be positioned in any one of an infinite number of positions between its 0 degree (as shown in FIG. 1) and its 180 degree positions. This provides a user with greatly expanded flexibility in how the welding gun 100 can be used.

Any known method or structure can be employed to stop or otherwise limit the rotation of the handle portion 103. For example, a rotation stop (not shown) can be placed on an inner surface of the handle portion 103 which will engage with a protrusion or the like on the conduit portion 123 to prevent over rotation of the handle portion 103.

In the above described embodiment, the degree of rotation is limited by the need to electrically couple the trigger assembly 107 with the conduit portion 123 and/or the gun tube assembly 119, and thus the cable 121. Often a wire type connection is employed. Because of this it is desirable to prevent over rotation, which could lead to breaking of the wires or electrical connection.

In a further embodiment of the invention, the handle portion can be rotated 180 degrees either in a clockwise or counterclockwise direction. In this embodiment, the welder can rotate the handle portion 103 in either one of the clockwise or counterclockwise direction to achieve the desired trigger location. Similar to as described above, a protrusion, locking device, or similar structure can be employed to block over-rotation in either direction. Therefore, in this embodiment, the handle portion 103 (and thus the trigger assembly 107) can be positioned in any position within 360 degrees from the trigger down position (shown in FIG. 1).

Within the embodiments described above, the electrical connections between the trigger assembly 107 and the conduit portion 123 are of sufficient length to allow for full rotation of the handle portion in either direction. The present invention is not limited in this regard.

In a further exemplary embodiment of the present invention, the electrical connection between the trigger assembly 107 and the conduit portion 123 are via a rotary electrical contact, such as a slip ring type. Because rotary electrical contacts are known, a detailed discussion of their operation and structure will not be included herein. However, in an embodiment employing rotary electrical contacts the handle portion 103 can be rotated freely throughout the entire 360 degrees from the trigger down position without damage to any wires or similar electrical contacts.

By employing various embodiments of the present invention, a user can adjust the trigger assembly position on the gun 100 to any position desired within a very short amount of time, without the need for disassembly of any portion of the gun 100, without changing the connection between the cable assembly 121, conduit structure 123 or gun tube assembly 119 and, if desired, the change can be made while the welding operation is ongoing.

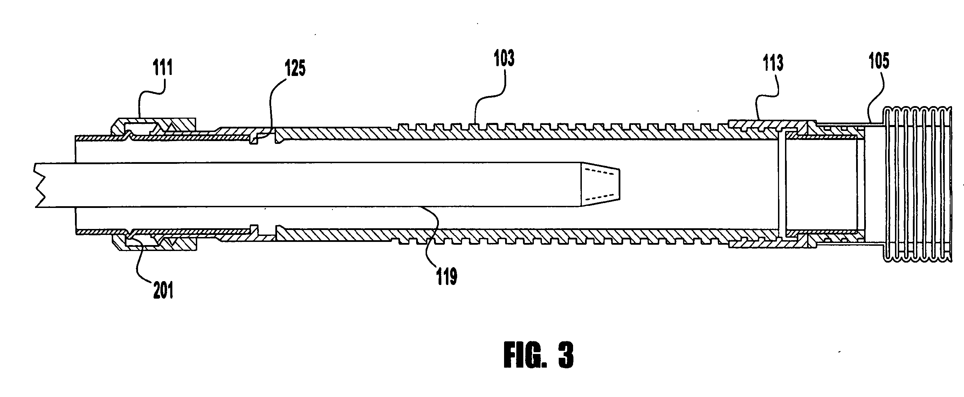

FIG. 3 depicts a more complete cross section of the gun assembly 100. However, again, the cable assembly 121 and conduit structure 123 are not shown for clarity.

As can be seen, in this exemplary embodiment, the locking collar 111 couples the fume tube assembly 101 to the handle portion 103. The handle portion 103 is coupled to the hose assembly 105 via the coupler 113. As described above, when the collar 111 is loosened or otherwise disengaged, the handle portion 103 is free to rotate with respect to the assembly 101 and the hose assembly 105.

In a further exemplary embodiment of the present invention, the coupler 113 can be replaced with another locking collar 111, such that a locking collar 111 is placed on both ends of the handle portion 103 to provide additional locking force.

In yet another exemplary embodiment, the locking collar 111 and the coupler 113 locations are reversed. In this embodiment, because of the connection between the cable assembly 121, conduit structure 123 and gun tube assembly 119, the fume tube assembly 101 remains secure and the handle portion 103 can be rotated relative to the hose assembly 105 and fume tube assembly 101.

In a further exemplary embodiment, the assembly 100 is configured such that locking collar 111 (or similar device) secures the handle 103 to the gun tube assembly 119 such that the fume tube 101 is kept from rotating by being fixedly secured between the handle 103 and the gun tube assembly 119. This embodiment is not expressly shown, but is well within the skills of those of in the industry coupled with knowledge disclosed herein. In such an embodiment, the handle 103 and/or the gun tube assembly 119 may have protrusions/retainer portions which provide for the locking and retaining force.

Of course, it is contemplated that the welding/brazing guns disclosed in this application can be configured in any way such that the scope of the invention as defined in the appended claims is maintained, and the invention is not limited to the exemplary embodiments discussed above.

The present invention has been described with certain embodiments and applications. These can be combined and interchanged without departing from the scope of the invention as defined in the appended claims.

### Reference numbers:

- 100: welding gun assembly
- 101: fume tube assembly
- 103: handle portion
- 105: hose assembly
- 107: trigger assembly
- 109: coupling fasteners
- 111: locking collar
- 113: coupler
- 115: nozzle assembly
- 119: gun tube assembly
- 117: fume openings
- 121: cable assembly
- 123: conduit structure
- 125: retainer portion
- 127: space
- 129: gap
- 201: protrusion
- 203: locking portion
- 205: threads
- 207: protrusion cavity

## Claims

1. A welding or brazing gun assembly, comprising:
a fume tube assembly (101);
a handle portion (103) having a trigger assembly (107); and **characterized by**
a locking mechanism which couples said fume tube assembly (101) with said handle portion (103),
wherein when said locking mechanism is in a first position said handle portion (103) is rotatably secured with respect to said fume tube assembly (101) and when said locking mechanism is in a second position said handle portion (103) is rotatable with respect to said fume tube assembly (101), and
wherein said locking mechanism remains adjacent to either of said fume tube assembly (101) or said handle portion (103) in both said first position and said second position and wherein said fume tube assembly (101) comprises a protrusion (201) which contacts said locking mechanism to provide a locking force when said locking mechanism is in said first position, and wherein said handle portion (103) comprises a retainer portion (105) which contacts said fume tube assembly (101) to provide a locking force when said locking mechanism is in said first position.

2. A welding or brazing gun assembly according to claim 1, wherein when said locking mechanism is in said second position said handle portion (103) can be rotated up to 180 degrees in either a clockwise or counterclockwise direction.

3. The welding or brazing gun assembly of anyone of the claims 1 to 2 wherein when said locking mechanism is in said second position said handle portion (103) is rotatable such that said trigger assembly (107) can be positioned at any position between 0 and 180 degrees with respect to a normal trigger assembly position.

4. The welding or brazing gun assembly of anyone of the claims 1 to 3 wherein when said locking mechanism is in said second position said handle portion (103) is rotatable such that said trigger assembly (107) can be positioned at any position between 0 and 360 degrees with respect to a normal trigger assembly position.

5. The welding or brazing gun assembly of anyone of the claims 1 to 4 wherein said locking mechanism is rotatable between said first position and said second position.

6. The welding or brazing gun assembly of anyone of the claims 1 to 5, wherein said protrusion extends around an entire perimeter of said fume tube assembly (101).

7. The welding or brazing gun assembly of anyone of the claims 2 to 6, wherein said retainer portion (125) extends around an entire perimeter of said handle portion (103).

8. The welding or brazing gun assembly of claim 1, wherein when said locking mechanism is in said second position said handle portion (103) can be rotated up to 180 degrees in either a clockwise or counterclockwise direction.

9. The welding or brazing gun assembly of anyone of the claims 1 to 8, wherein said locking mechanism is a locking collar (111) having threads (205) on an inner surface thereof.

## Patentansprüche

1. Schweiß- oder Hartlötpistolenbaugruppe, die Folgendes umfasst:
einen Dampfrohrbaugruppe (101);
einen Handgriffabschnitt (103), der eine Auslösebaugruppe (107) aufweist; und **gekennzeichnet durch**
einen Verriegelungsmechanismus, der die Dampfrohrbaugruppe (101) mit dem Handgriffabschnitt (103) koppelt,
wobei, wenn sich der Verriegelungsmechanismus in einer ersten Position befindet, der Handgriffabschnitt (103) drehbar mit Bezug auf die Dampfrohrbaugruppe (101) gesichert ist, und wenn sich der Verriegelungsmechanismus in einer zweiten Position befindet, der Handgriffabschnitt (103) drehbar mit Bezug auf die Dampfrohrbaugruppe (101) gesichert ist, und
wobei der Verriegelungsmechanismus sowohl in der ersten Position als auch in der zweiten Position neben der Dampfrohrbaugruppe (101) oder dem Handgriffabschnitt (103) bleibt, und wobei die Dampfrohrbaugruppe (101) einen Vorsprung (201) umfasst, der den Verriegelungsmechanismus berührt, um eine Verriegelungskraft auszuüben, wenn sich der Verriegelungsmechanismus in der ersten Position befindet, und wobei der Handgriffabschnitt (103) einen Halteabschnitt (105) umfasst, der die Dampfrohrbaugruppe (101) berührt, um eine Verriegelungskraft auszuüben, wenn sich der Verriegelungsmechanismus in der ersten Position befindet.

2. Schweiß- oder Hartlötpistolenbaugruppe nach Anspruch 1, wobei, wenn sich der Verriegelungsmechanismus in der zweiten Position befindet, der Handgriffabschnitt (103) um bis zu 180 Grad entweder im Uhrzeigersinn oder entgegen dem Uhrzeigersinn gedreht werden kann.

3. Schweiß- oder Hartlötpistolenbaugruppe nach einem der Ansprüche 1 und 2, wobei, wenn sich der Verriegelungsmechanismus in der zweiten Position befindet, der Handgriffabschnitt (103) so gedreht werden kann, dass die Auslösebaugruppe (107) in jeder beliebigen Position zwischen 0 und 180 Grad mit Bezug auf eine normale Auslösebaugruppenposition positioniert werden kann.

4. Schweiß- oder Hartlötpistolenbaugruppe nach einem der Ansprüche 1 bis 3, wobei, wenn sich der Verriegelungsmechanismus in der zweiten Position befindet, der Handgriffabschnitt (103) so gedreht werden kann, dass die Auslösebaugruppe (107) in jeder beliebigen Position zwischen 0 und 360 Grad mit Bezug auf eine normale Auslösebaugruppenposition positioniert werden kann.

5. Schweiß- oder Hartlötpistolenbaugruppe nach einem der Ansprüche 1 bis 4, wobei der Verriegelungsmechanismus zwischen der ersten Position und der zweiten Position gedreht werden kann.

6. Schweiß- oder Hartlötpistolenbaugruppe nach einem der Ansprüche 1 bis 5, wobei sich der Vorsprung um einen gesamten Umfangsrand der Dampfrohrbaugruppe (101) herum erstreckt.

7. Schweiß- oder,Hartlötpistolenbaugruppe nach einem der Ansprüche 2 bis 6, wobei sich der Halteabschnitt (125) um einen gesamten Umfangsrand des Handgriffabschnitts (103) herum erstreckt.

8. Schweiß- oder Hartlötpistolenbaugruppe nach Anspruch 1, wobei, wenn sich der Verriegelungsmechanismus in der zweiten Position befindet, der Handgriffabschnitt (103) um bis zu 180 Grad entweder im Uhrzeigersinn oder entgegen dem Uhrzeigersinn gedreht werden kann.

9. Schweiß- oder Hartlötpistolenbaugruppe nach einem der Ansprüche 1 bis 8, wobei der Verriegelungsmechanismus ein Verriegelungsbund (111) ist, der an seiner Innenfläche mit Gewindegängen (205) versehen ist.

## Revendications

1. Ensemble de pistolet de soudure ou de brasage, comprenant :
un ensemble de tube de fumée (101) ;
une portion de manche (103) comportant un ensemble de gâchette (107) ; et **caractérisé par**
un mécanisme de verrouillage qui couple ledit ensemble de tube de fumée (101) à ladite portion de manche (103),
dans lequel lorsque ledit mécanisme de verrouillage se trouve à une première position, ladite portion de manche (103) est fixée de manière à pouvoir tourner par rapport au dit ensemble de tube de fumée (101) et, lorsque ledit mécanisme de verrouillage se trouve à une deuxième position, ladite portion de manche (103) est rotative par rapport au dit ensemble de tube de fumée (101), et
dans lequel ledit mécanisme de verrouillage reste adjacent au dit ensemble de tube de fumée (101) ou à ladite portion de manche (103) à ladite première position et à ladite deuxième position et dans lequel ledit ensemble de tube de fumée (101) comprend une protubérance (201) qui entre en contact avec ledit mécanisme de verrouillage pour fournir une force de verrouillage lorsque ledit mécanisme de verrouillage se trouve à ladite première position, et dans lequel ladite portion de manche (103) comprend une portion de fixation (105) qui entre en contact avec ledit ensemble de tube de fumée (101) pour fournir une force de verrouillage lorsque ledit mécanisme de verrouillage se trouve à ladite première position.

2. Ensemble de pistolet de soudure ou de brasage selon la revendication 1, dans lequel lorsque ledit mécanisme de verrouillage se trouve à ladite deuxième position, ladite portion de manche (103) peut être tournée jusqu'à 180° dans le sens des aiguilles d'une montre ou dans le sens inverse des aigles d'une montre.

3. Ensemble de pistolet de soudure ou de brasage selon l'une quelconque des revendications 1 et 2, dans lequel, lorsque ledit mécanisme de verrouillage se trouve à ladite deuxième position, ladite portion de manche (103) est rotative de sorte que ledit ensemble de gâchette (107) puisse être positionné à n'importe quelle opposition entre 0 et 180 degrés par rapport à une position normale d'ensemble de gâchette.

4. Ensemble de pistolet de soudure ou de brasage selon l'une quelconque des revendications 1 à 3, dans lequel, lorsque ledit mécanisme de verrouillage se trouve à ladite deuxième position, ladite portion de manche (103) est rotative de sorte que ledit ensemble de gâchette (107) puisse être positionné à n'importe quelle opposition entre 0 et 360 degrés par rapport à une position normale d'ensemble de gâchette.

5. Ensemble de pistolet de soudure ou de brasage selon l'une quelconque des revendications 1 à 4, dans lequel ledit mécanisme de verrouillage est rotatif entre ladite première position et ladite deuxième position.

6. Ensemble de pistolet de soudure ou de brasage selon l'une quelconque des revendications 1 à 5, dans lequel ladite protubérance s'étend autour d'un périmètre complet dudit ensemble de tube de fumée (101).

7. Ensemble de pistolet de soudure ou de brasage selon l'une quelconque des revendications 2 à 6, dans lequel ladite portion de fixation (125) s'étend autour d'un périmètre complet de ladite portion de manche (103).

8. Ensemble de pistolet de soudure ou de brasage selon la revendication 1, dans lequel, lorsque ledit mécanisme de verrouillage se trouve à ladite deuxième position, ladite portion de manche (103) peut être tournée jusqu'à 180 degrés dans le sens des aiguilles d'une montre ou dans le sens inverse des aiguilles d'une montre.

9. Ensemble de pistolet de soudure ou de brasage selon l'une quelconque des revendications 1 à 8, dans lequel ledit mécanisme de verrouillage est un collier de verrouillage (111) ayant des filetages (205) sur une surface intérieure de celui-ci.
